# EUROPÄISCHE PATENTSCHRIFT

(11) **EP 1 621 490 B1**
(45) Veröffentlichungstag und Bekanntmachung des Hinweises auf die Patenterteilung: **21.09.2011**
(21) Anmeldenummer: 05077025.4
(22) Anmeldetag: 05.02.2003
(51) Int. Cl.: B65G 47/51

(54) **Speichereinrichtung mit variabler speicherkapazität**
Variable-capacity store
Magasin à capacité variable

(43) Veröffentlichungstag der Anmeldung: 01.02.2006
(62) Teilanmeldung aus: 03090031.0
(73) Patentinhaber: Hauni Maschinenbau AG, 21033 Hamburg (DE)
(72) Erfinder: Müller, Thomas, 20259 Hamburg (DE)
(74) Vertreter: Wenzel & Kalkoff

(56) Entgegenhaltungen:
- EP-A- 1 059 853
- EP-A2- 1 273 537

## Beschreibung

Die Erfindung befasst sich mit einer Speichereinrichtung mit variabler Speicherkapazität, insbesondere zum Speichern stabförmiger Produkte, mit einem Eingabebereich, einem Ausgabebereich sowie einem kontinuierlichen Förderelement, das den Eingabebereich mit dem Ausgabebereich verbindet, derart, dass der Speicher nach dem Prinzip "First in - First out" (FiFo-Speicher) arbeitet, wobei das Förderelement, das mittels Führungselementen schleifenartig vom Eingabebereich bis zum Ausgabebereich geführt ist, einen üblicherweise mit Produkten versehenen mehrlagigen Speicherbereich, nämlich einen sogenannten Volltrum, sowie einen üblicherweise produktfreien mehrlagigen Rückfiihrbereich, nämlich einen sogenannten Leertrum, aufweist, wobei sich die beiden Bereiche in der Länge je nach Füllstand des Speichers kompensieren, derart, dass die gesamte Länge des Förderelementes konstant ist, und der Volltrum und der Leertrum jeweils über separate Führungselemente verfügen, wobei sowohl der Volltrum als auch der Leertrum jeweils über ein ortsfestes Führungselement und ein bewegbares Führungselement verfügen und die bewegbaren Führungselemente von Volltrum und Leertrum an einem gemeinsamen Schlitten angeordnet sind, wobei das ortsfeste und das bewegbare Führungselement des Volltrums als Scheibentürme ausgebildet sind, die jeweils mehrere Scheiben aufweisen, die auf einer vertikalen Achse drehbar angeordnet sind.

Derartige Speicher werden insbesondere im Bereich der tabakverarbeitenden Industrie eingesetzt und verbinden Produktionsmaschinen, z. B. eine Zigarettenherstellmaschine - im folgenden auch als "Maker" bezeichnet -, mit einer Zigarettenverpackungsmaschine - im folgenden auch als "Packer" bezeichnet -. Der Speicher hat die Aufgabe, kurze Stillstandszeiten des Makers bzw. Packers zu überbrücken, ohne das die vollständige Produktionslinie gestoppt werden muss, so dass eine kontinuierliche Produktion gewährleistet ist. Während des Betriebes der Produktionslinie verändert sich der Speicherfüllstand in Abhängigkeit von Stör- bzw. Stillstandszeiten einzelner Komponenten. Für den Fall, dass z.B. der dem Speicher nachgeordnete Packer eine Störung aufweist, füllt sich der Speicher bis zu einem Speichermaximum, indem sich die Länge des Volltrums vergrößert, bei gleichzeitiger Verkürzung des Leertrums.
Sollte der dem Speicher vorgeschaltete Maker eine Störung aufweisen, wird der Betrieb der Produktionslinie zumindest zeitweise dadurch aufrechterhalten, dass der Packer die Produkte aus dem Speicher erhält, bis das Speicherminimum erreicht ist. Durch die stetige Abgabe von Produkten aus dem Speicher - bei gleichzeitig fehlender Zulieferung von Produkten in den Speicher - verringert sich die Länge des Volltrums, während sich die Länge des Leertrums entsprechend verlängert, so dass die Gesamtlänge des umlaufenden Förderelementes daher stets konstant ist. Das Förderelement ist dabei zur Schaffung eines möglichst langen Speicher- bzw. Transportweges schleifenartig gewunden.

Bei einer bekannten Speichereinrichtung gemäß EP 1 059 853 B1 sind der Volltrum und der Leertrum übereinander, d.h. in unterschiedlichen Ebenen zueinander angeordnet. Es werden daher sowohl für den Volltrum als auch für den Leertrum jeweils zwei für die Führung und Umlenkung des Förderelementes notwendige Führungselemente benötigt. Auch muss das Förderelement von der unteren in die obere Ebene und zurück gelenkt werden, was einen zusätzlichen konstruktiven Aufwand erfordert. Dies hat zum einen den Nachteil, dass der bekannte Speicher eine große Bauhöhe aufweist, was den Einsatz gerade in Fertigungshallen mit niedriger Deckenhöhe erschwert bzw. ganz unmöglich macht. Zum anderen ist die Wartung bzw. der Service einer solchen Speichereinrichtung sehr aufwendig, da Einzelteile u.U. nur schwer zugänglich sind. Des weiteren weist der bekannte Speicher eine große Teilevielfalt auf, was zu hohen Herstellungskosten führt.

Gleiches gilt für eine weitere bekannte Speichereinrichtung gemäß WO 02/085144 A1, bei der der Volltrum und der Leertrum grundsätzlich nebeneinander angeordnet sind. Allerdings überlagern sich Volltrum und Leertrum bzw. kreuzen sich im Bereich eines gemeinsamen Führungselementes, so dass Volltrum und Leertrum mindestens im Bereich des gemeinsamen Führungselementes übereinander angeordnet sind. Dies hat zum einen den Nachteil, dass die Bauhöhe der bekannten Speichereinrichtung erheblich ist, und zwar bedingt durch die blockweise oder abwechselnde Schichtung der einzelnen Windungen des Volltrums und des Leertrums im Bereich des gemeinsamen Führungselementes. Zum anderen erfordert die bekannte Konstruktion eine Vielzahl von Umlenkungen bzw. Umlenkvorrichtungen, was zu einer hohen Teilevielfalt führt.

Das Dokument EP 1 273 537 A2 offenbart eine Speichereinrichtung gemäß dem Oberbegriff des Anspruchs 1.

Sämtlichen bekannten Vorrichtungen ist gemeinsam, dass die Führungselemente des Volltrums bzw. des Leertrums identisch sind, was neben einer dadurch bedingten großen Bauform auch zu einer Reduzierung der Speicherkapazität führt.

Es ist daher Aufgabe der vorliegenden Erfindung, einen kostengünstigen und technisch einfachen Speicher zu schaffen, der gegenüber den herkömmlichen Speichern kompakter ausgebildet ist und eine verbesserte Speicherkapazität aufweist.

Diese Aufgabe wird durch den eingangs erwähnten Speicher mit den Merkmalen des Oberbegriffs des Anspruches 1 dadurch gelöst, dass das ortsfeste und das bewegbare Führungselement des Leetrums unterschiedlich ausgebildet sind, derart, dass das bewegbare Führungselement des Leertrums aus zwei Tellertürmen, die jeweils mehrere Teller aufweisen, die auf einer vertikalen Achse drehbar angeordnet sind, gebildet ist, und das ortsfeste Führungselement des Leertrums aus mehreren Umlenkrollen, die jeweils auf einer horizontalen Achse drehbar angeordnet sind, gebildet ist, wobei die Teller einen deutlich geringeren Durchmesser, nämlich höchstens halb so groß, wie die Speicherschreiben aufweisen. Dadurch wird zum einen ein kompakter Speicher geschaffen, der eine geringe Bauhöhe aufweist, da ein "mehrstöckiger" Aufbau vermieden wird. Die Baugröße ist auch mit Bezug auf die Länge des Speichers wegen der verschachtelten Konstruktion von Volltrum und Leertrum gegenüber den bekannten Lösungen reduziert, und zwar bei gleicher bzw. sogar verbesserter Speicherkapazität. Die schleifenartige Führung des Volltrums einerseits und die mäanderförmige Führung des beanspruchungsoptimierten Leertrums andererseits, ermöglicht auf besonders effiziente und einfache Weise eine Reduktion in den Abmessungen des Speichers. Zum anderen wird durch die erfindungsgemäße Gestaltung des Speichers auch eine deutliche Reduzierung der Teile erreicht, was einerseits die Herstellkosten senkt und andererseits den Wartungsaufwand reduziert. Ein besonderer Vorteil des erfindungsgemäßen Speichers liegt darin, dass die Laufrichtung des Förderelementes frei wählbar ist, so dass die Layoutvielfalt und damit das Einsatzgebiet für diesen Speicher erhöht ist.

Durch die kleine Ausbildung der Teller gegenüber den Speicherscheiben wird eine noch effektivere Verschachtelung des Volltrums mit dem Leerturm erreicht.

Eine Weiterbildung der Erfindung zeigt einen Speicher, bei dem oberhalb der Scheibentürme eine ortsfeste Einlaufscheibe und unterhalb des ortsfesten Scheibenturms eine Auslaufscheibe angeordnet ist. Die Einlaufscheibe und die Auslaufscheibe vereinfachen das Befüllen bzw. Entleeren des Speichers insbesondere dann, wenn der Durchmesser der Einlaufscheibe größer als der Durchmesser der Auslaufscheibe und der Durchmesser der Auslaufscheibe größer als der Durchmesser der Speicherscheiben ist. Dadurch ergeben sich nämlich zusätzlich zwei vertikale Ebenen, von denen eine als Eingabe- und die andere als Ausgabeebene dient. Die Positionierung der Ein- und Ausgabepunkte ist damit frei wählbar, was wiederum die Layoutflexibilität erhöht.

Bei einer weiteren bevorzugten Gestaltung des erfindungsgemäßen Speichers sind sämtliche Achsen der Tellertürme und der Scheibentürme jeweils an ihren beiden Enden gelagert. Durch die Vermeidung von fliegenden Lagerungen erhöht sich die Stabilität der Speichereinrichtung, was die Störanfälligkeit und damit den Wartungsaufwand reduziert und auch eine leichtere Bauweise ermöglicht, da die Lagerpunkte der Achsen nahezu momentenfrei sind.

Vorzugsweise ist im Bereich des Leertrums eine Spannvorrichtung für das Förderelement vorgesehen. Im Kombination mit der Anordnung des Volltrums und des Leertrums in einer Ebene sind nur geringe Reibkräfte zu überwinden, um das Förderelement durch Zug am Förderelement selbst, insbesondere im Bereich des Leetrums, zu spannen.

Weitere bevorzugte Ausführungsformen und Merkmale des erfindungsgemäßen Speichers ergeben sich aus den Unteransprüchen sowie der Beschreibung. Eine besonders bevorzugte Ausführungsform des Speichers wird anhand der Zeichnung näher erläutert. In der Zeichnung zeigt:
- Fig. 1: eine perspektivische Vorderansicht einer erfindungsgemäßen Ausführungsform der Speichereinrichtung von schräg oben,

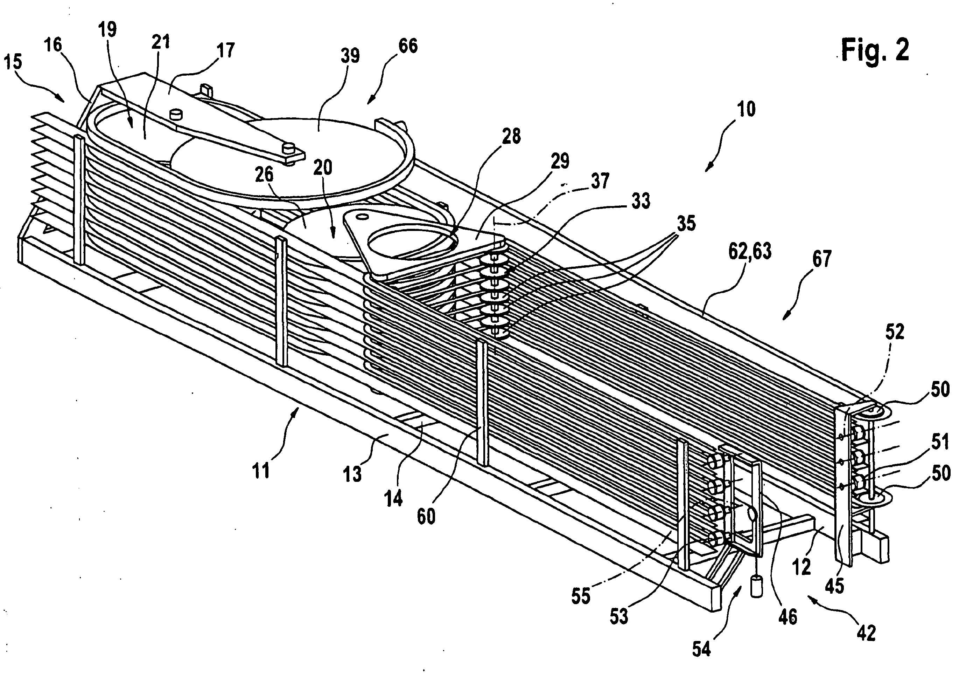

- Fig. 2: eine perspektivische Rückansicht der Speichereinrichtung gemäß Figur 1 von schräg oben,

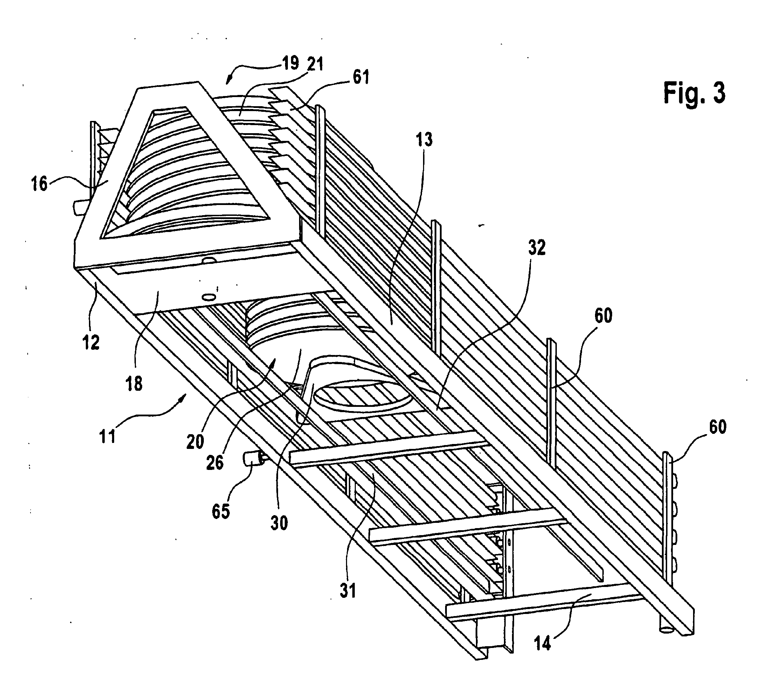

- Fig. 3: eine perspektivische Vorderansicht der Speichereinrichtung gemäß Figur 1 von schräg unten,

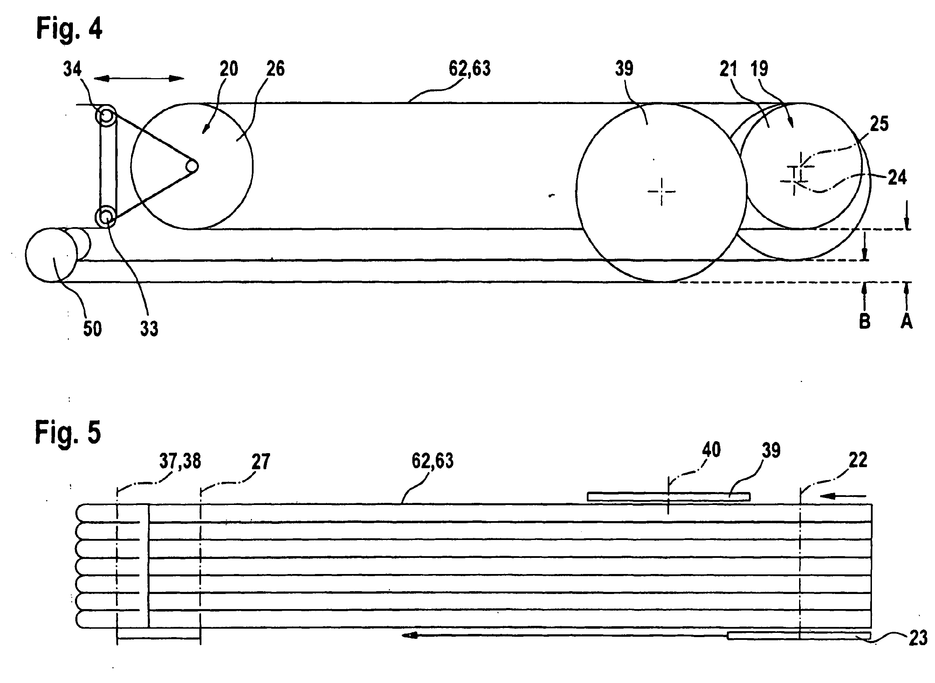

- Fig. 4: eine schematische Darstellung der Speichereinrichtung in Draufsicht,
- Fig. 5: eine schematische Darstellung der Speichereinrichtung gemäß Figur 4 in Seitenansicht,

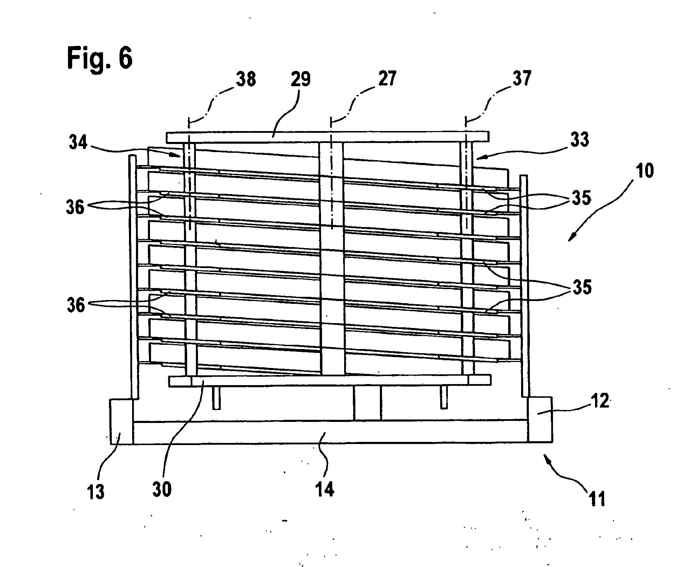

- Fig. 6: eine Rückansicht der Speichereinrichtung gemäß Figur 1, und

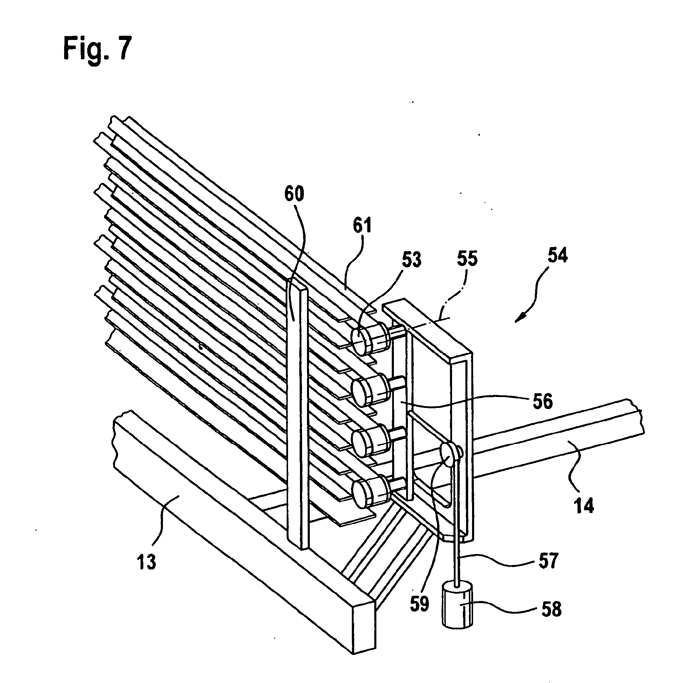

- Fig. 7: einen Ausschnitt, nämlich die Spannvorrichtung, der Speichereinrichtung gemäß Figur 1 in vergrößerter Darstellung.

Die im folgenden beschriebene Speichereinrichtung dient als Verkettungselement zwischen einer ersten (nicht dargestellten) Zigarettenherstellmaschine, dem Maker, und einer zweiten (nicht dargestellten) Zigarettenverpackungsmaschine, dem Packer. Die Speichereinrichtung ist insbesondere zur Förderung und Speicherung von Zigaretten in einer geschlossenen Maker-Packer-Verbindung, einem sogenannten Hardlink, geeignet. Es sind jedoch auch andere Einsatzmöglichkeiten für die beschriebene Speichereinrichtung möglich.

Die Speichereinrichtung 10 (im folgenden auch als Speicher bezeichnet) weist einen Grundrahmen 11 auf, der aus zwei langgestreckten Längsprofilen 12, 13 sowie mehreren Querprofilen, den Traversen 14, zur Verbindung der parallel einander gegenüberliegenden Längsprofilen 12, 13 gebildet ist. Die Traversen 14 dienen gleichzeitig zur Versteifung des Grundrahmens 11. An einer Stirnseite 15 des Grundrahmens 11 ist ein Tragarm 16 angeordnet. Der Tragarm 16 ist von der Seite aus betrachtet L-förmig gebildet. Ein freier Schenkel 17 des Tragarms 16 erstreckt sich im wesentlichen parallel zu den Längsprofilen 12, 13. Im Bereich der Stirnseite 15 ist zwischen den Längsprofilen 12, 13 eine Bodenplatte 18 befestigt, und zwar im wesentlichen parallel und beabstandet zum Schenkel 17.

Zwischen den Längsprofilen 12, 13 befinden sich zwei Scheibentürme 19, 20. Einer der Scheibentürme 19, zweckmäßigerweise der im Bereich der Stirnseite 15 befindliche, ist ortsfest ausgebildet. Der Scheibenturm 19 ist aus mehreren übereinander angeordneten Speicherscheiben 21 gebildet, die alle auf einer gemeinsamen, vertikalen Achse 22 drehbar angeordnet sind. Die Achse 22 ist zu beiden Seiten, nämlich in der Bodenplatte 18 und im Schenkel 17 gelagert. Die Anzahl der Speicherscheiben 21 hängt von der gewünschten maximalen Speicherkapazität der Speichereinrichtung 10 ab. Mit jeder zusätzlichen Speicherscheibe 21 wird eine neue Ebene erzeugt, was wiederum zu einer Erhöhung der maximalen Speicherkapazität führt. Unterhalb des ortsfesten Scheibenturms 19 ist zusätzlich eine Auslaufscheibe 23 angeordnet. Die Auslaufscheibe 23 ist ebenfalls drehbar auf der Achse 22 angeordnet. Üblicherweise ist der Durchmesser der Auslaufscheibe 23 größer als der Durchmesser der Speicherscheiben 21, so dass die Auslaufscheibe 23 einen Überstand A gegenüber den Speicherscheiben 21 aufweist. Alternativ oder kumulativ kann der Mittelpunkt 24 der Auslaufscheibe 23 auch versetzt zum Mittelpunkt 25 der Speicherscheiben 21 sein. Hierzu ist die Achse 22 dann stufenartig ausgebildet, so dass die Mittel- bzw. Drehpunkte 24, 25 unterschiedlich sind.

Der andere, benachbart zum Scheibenturm 19 angeordnete Scheibenturm 20 ist relativ zum Scheibenturm 19 beweglich ausgebildet. Der Scheibenturm 20 weist ebenfalls mehrere übereinander angeordnete Speicherscheiben 26 auf, die alle auf einer gemeinsamen, vertikalen Achse 27 drehbar angeordnet sind. Die Anzahl der Speicherscheiben 26 korrespondiert mit der Anzahl der Speicherscheiben 21. Die Achse 27 ist zu beiden Seiten in einem verfahrbaren Schlitten 28 gelagert. Hierzu weist der Schlitten 28 eine Deckplatte 29 und eine Basisplatte 30 auf. Die zweckmäßigerweise dreieckförmig ausgebildeten Platten 29 und 30 sind horizontal und beabstandet zueinander parallel angeordnet. Mindestens die Basisplatte 30 ist an zwei gegenüberliegenden Seiten in und/oder auf Linearführungen 31, 32 geführt. Dadurch ist der Schlitten 28 insgesamt in Längsrichtung der Längsprofile 12, 13, und zwar in eindimensionaler Richtung parallel zu den Längsprofilen 12, 13 verfahrbar.

Zusätzlich sind am Schlitten 28 zwei Tellertürme 33, 34 angeordnet. Die Tellertürme 33, 34 sind identisch aufgebaut und verfügen jeweils über eine Anzahl Teller 35 bzw. 36. Die Teller 35 bzw. 36 sind jeweils auf einer vertikalen Achse 37 bzw. 38 drehbar angeordnet. Die Anzahl der Teller 35 bzw. 36 auf jeder Achse 37 bzw. 38 entspricht der Anzahl der Speicherscheiben 21 bzw. 26 auf den Achsen 22 bzw. 27. Beispielsweise kann der bewegliche Scheibenturm 20 zur Bildung von sechs Speicherebenen sechs Speicherscheiben 26 aufweisen. Korrespondierend dazu weist der ortsfeste Speicherturm 19 ebenfalls sechs Speicherscheiben 21 auf. Die Tellertürme 33, 34 weisen im genannten Beispiel ebenfalls jeweils sechs Teller 35, 36 auf. Die Teller 35, 36 weisen einen deutlich geringeren Durchmesser auf als die Speicherscheiben 21, 26. Vorzugsweise sind die Durchmesser der Speicherscheiben 21, 26 um ein Mehrfaches größer als die Durchmesser der Teller 35, 36. Zweckmäßigerweise sind die Durchmesser der Speicherscheiben 21, 26 mindestens doppelt so groß wie die Durchmesser der Teller 35, 36.

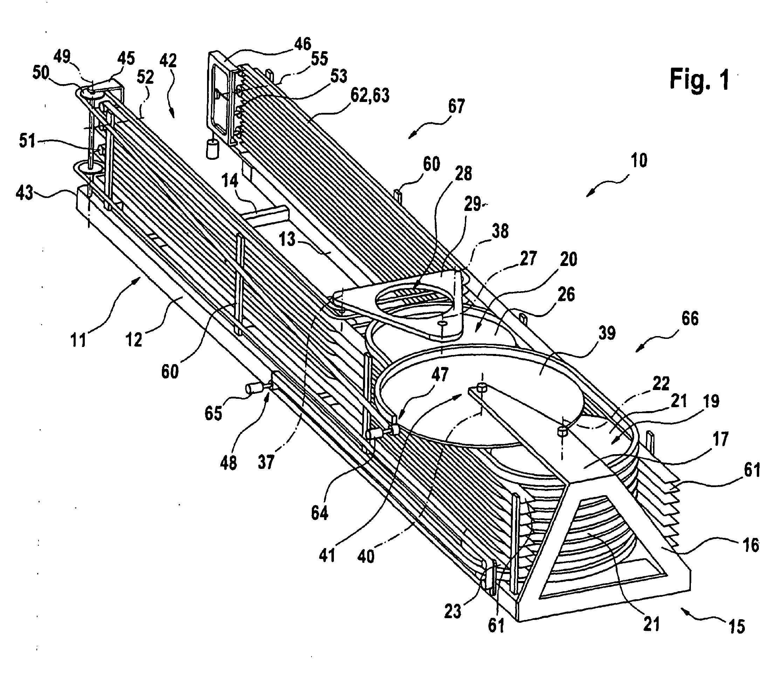

Oberhalb der Scheibentürme 19, 20 (in Figur 1) befindet sich eine Einlaufscheibe 39. Die Einlaufscheibe 39 ist auf einer vertikalen Achse 40 angeordnet. Die Achse 40 ist fliegend am freien Ende 41 des Schenkels 17 gelagert. Der Durchmesser der Einlaufscheibe 39 ist größer als der Durchmesser der Auslaufscheibe 23, so dass sich ein Überstand B ergibt. Zweckmäßigerweise betragen die Überstände A und B jeweils etwa 300mm. Es sind aber auch andere Werte für die Überstände A und B wählbar. In alternativen Ausführungsformen kann auch die Auslaufscheibe 23 im Durchmesser größer als die Einlaufscheibe 39 sein. Vorzugsweise sind jedoch sowohl die Einlaufscheibe 39 als auch die Auslaufscheibe 23 im Durchmesser größer als die Speicherscheiben 21, 26. Des weiteren besteht auch die Möglichkeit, dass die Auslaufscheibe 23 oberhalb der Scheibentürme 19, 20 angeordnet ist, während sich die Einlaufscheibe 39 unterhalb der Scheibentürme 19, 20 befindet.

An der dem Tragarm 16 gegenüberliegenden Stirnseite 42 des Speichers 10 sind an beiden freien Enden 43, 44 der Längsprofile 12, 13 jeweils vertikale Rahmen 45, 46 angeordnet. Der Rahmen 45, der zweckmäßigerweise aber nicht notwendigerweise auf der Seite des Speichers 10 angeordnet ist, auf der sich ein Eingabebereich 47 und ein Ausgabebereich 48 des Speichers 10 befinden, dient zum einen der Lagerung einer vertikalen Achse 49, die mit einem Ende am Rahmen 45 und mit dem anderen Ende am Längsprofil 12 gelagert ist. Auf der Achse 49 sind zwei Teller 50 drehbar gelagert. Zusätzlich sind am Rahmen 45 mehrere Umlenkrollen 51 übereinander angeordnet. Die Umlenkrollen 51 sind jeweils auf einer horizontalen Achse 52 drehbar befestigt. Die Anzahl der Umlenkrollen 51 hängt von der Anzahl der durch die Teller 35, 36 bzw. Speicherscheiben 21, 26 gebildeten Ebenen ab. Die Teller 50 sind oberhalb bzw. unterhalb der Umlenkrollen 51 angeordnet und rahmen diese quasi ein.

Der Rahmen 46 am Längsprofil 13 ist ebenfalls zur Aufnahme von Umlenkrollen 53 ausgebildet und dient als Spannvorrichtung 54. Die Umlenkrollen 53 sind jeweils auf einer horizontalen Achse 55 drehbar befestigt. Die Achsen 55 sind fest an einer Spannleiste 56 angeordnet, die linear bewegbar innerhalb des Rahmens 46 geführt ist. An der Spannleiste 56 ist über ein Seil 57 oder dergleichen ein Gewicht 58 zur Spannung der Kette 63 angebracht. Das Seil 57 ist über eine Umlenkrolle 59 geführt. Die Spannung der Kette 63 ist jedoch auf andere übliche Weise, z.B. durch Federkraft, über pneumatische oder hydraulische Einrichtungen oder dergleichen einstellbar.

Zu beiden Seiten des Speichers 10 sind vertikale Streben 60 an den Längsprofilen 12, 13 befestigt. Die Streben 60 dienen zur Halterung von Führungsblechen 61. Die Führungsbleche 61 sind flache, sich linear erstreckende Bleche, die sich nahezu über die gesamte Länge der Längsprofile 12, 13 erstrecken. Mehrere Führungsbleche 61 sind auf jeder Seite des Speichers 10 übereinander angeordnet. Die Anzahl der Führungsbleche 61 hängt von der Anzahl der durch die Anzahl der Teller 35, 36 bzw. der Speicherscheiben 21, 26 definierten Ebenen des Speichers 10 ab.

Als Förderelement 62 weist der Speicher 10 eine endlose Kette 63 auf. Die Kette 63 hat eine konstante Länge und ist schleifenartig, ausgehend vom Eingabebereich 47 bis zum Ausgabebereich 48, um die Einlaufscheibe 39, die Speicherscheiben 21, 26, die Teller 35, 36, die Umlenkrollen 51, 53, die Teller 50 und die Auslaufscheibe 23 geführt. Die Kette 63 ist zur Aufnahme stabförmiger Produkte, insbesondere von Zigaretten, Filtern etc., ausgebildet, die mit ihrer Längserstreckung quer zur Transportrichtung der Kette 63 auf dieser liegen. Die Kette 63 ist ovalförmig in mehreren Ebenen geführt, wobei die Umlenkpunkte durch die mitlaufenden Speicherscheiben 21, 26 sowie die Einlaufscheibe 39 und die Auslaufscheibe 23 gebildet sind. Um die Kette 63 von einer Ebene in die nächste zu führen, sind die Speicherscheiben 21, 26, die Einlaufscheibe 39 und die Auslaufscheibe 23 geneigt ausgebildet. Zweckmäßigerweise beträgt die Neigung etwa 3,5° zu den Achsen 19 bzw. 27. Die Neigung wird zweckmäßigerweise durch eine "schiefe" Bohrung in den Speicherscheiben 21, 26, der Einlaufscheibe 39 und der Auslaufscheibe 23 erreicht. In einer weiteren Ausführungsform sind auch die Teller 35, 36 geneigt ausgebildet, und zwar ebenfalls durch eine "schiefe" Bohrung und um den gleichen Winkelbetrag von etwa 3,5° wie die Speicherscheiben 21, 26. Dadurch wird insbesondere die Kettenführung zwischen den Tellern 35, 36 vereinfacht, so dass die Kettenbelastung wegen reduzierter Reibverluste verringert werden kann. Der Neigungswinkel kann jedoch auch größer oder kleiner 3,5° sein.

Das Förderelement 62 bzw. die Kette 63 ist im wesentlichen in zwei Bereiche aufgeteilt, nämlich zum einen in den während des Betriebes mit Produkten belegten Volltrum 66 mit seinem ortsfesten Scheibenturm 19 und seinem ortsveränderlichen Scheibenturm 20 und zum anderen in den während des Betriebes produktfreien Leertrum 67 mit seinen zwei ortsveränderlichen Tellertürmen 33, 34 und zwei ortsfesten Umlenkstationen, die durch die an den Rahmen 45, 46 angeordneten Umlenkrollen 51 bzw. 53 gebildet sind. Volltrum 66 und Leertrum 67 liegen vollständig nebeneinander in einer gemeinsamen Ebene. Dabei verfügen Volltrum 66 und Leertrum 67 jeweils über separate Führungselemente, die untereinander auch noch unterschiedlich sein können. Die Führungselemente des Volltrums 66 werden durch die Scheibentürme 19, 20 gebildet. Die Führungselemente des Leertrums 67 umfassen die Tellertürme 33, 34 sowie die Umlenkrollen 51, 53.

Die Kettenbereiche des Volltrums 66 und des Leertrums 67 verhalten sich komplementär zueinander. D.h., dass eine Verlängerung des Volltrums 66 geht zu Lasten der Länge des Leertrums 67 und umgekehrt. Im Bereich des Volltrums 66 ist die Kette 63 ovalförmig um die Scheibentürme 19, 20 gewickelt. Im Bereich des Leertrums 67 entsteht durch die Tellertürme 33, 34 sowie die Umlenkrollen 51, 53 ein mäanderförmiger Verlauf der Kette 63. Jeder Schleife bzw. Lage des Volltrums 66 ist in derselben Ebene eine Schleife bzw. Lage des Leertrums 67 zugeordnet. Dadurch können die Schleifen des Volltrums 66 und des Leertrums 67, die in derselben Ebene liegen, auch dieselben Führungen, die durch die Führungsbleche 61 gebildet werden, verwenden.

Bei dem in Figur 1 gezeigten Layout sind, wie bereits weiter oben angesprochen, der Eingabebereich 47 und der Ausgabebereich 48 auf derselben Seite des Speichers 10 angeordnet. Bedingt durch den Überstand A bzw. B der Auslaufscheibe 23 bzw. der Einlaufscheibe 39 ergeben sich unterschiedliche vertikale Ebenen für die Eingabe bzw. Ausgabe der Produkte in den Speicher 10. Im gezeigten Ausführungsbeispiel befindet sich der Eingabebereich 47 oberhalb der Speicherscheiben 21, 26, während sich der Ausgabebereich 48 unterhalb der Speicherscheiben 21, 26 befindet. Dadurch ist eine freie Positionierung der Eingabe- und Ausgabepunkte entlang einer Geraden möglich, ohne das Produkt durch zusätzliche Umlenkungen des Massenstroms zu belasten. Auch die Wahl der Ein- und Ausgabehöhe ist frei wählbar. Sogar die Laufrichtung der Kette 63 läßt sich umkehren. Neben dem gezeigten Layout lassen sich daher beliebige Layouts ohne großen Änderungsaufwand realisieren bzw. an spezifische Kundenwünsche anpassen. Es besteht z.B. die Möglichkeit, den Eingabebereich 47 und den Ausgabebereich 48 auf unterschiedlichen Seiten des Speichers 10 oder beide Bereiche 47 und 48 auf der anderen als der im gezeigten Ausführungsbeispiel gewählten Seite anzuordnen.

Im Eingabebereich 47 ist ein erster Antrieb 64 für die Kette 63 angeordnet. Im Ausgabebereich ist ein zweiter Antrieb 65 ebenfalls für die Kette 63 befestigt. Die Antriebe 64, 65 sind mit einer gemeinsamen Steuerung verbunden. Die Steuerung ermöglicht das automatisierte Kompensieren der Längen des Volltrums 66 und des Leertrums 67 in Abhängigkeit der Geschwindigkeitsdifferenz der Antriebe 64, 65. Mit anderen Worten bewirkt die Geschwindigkeitsdifferenz zwischen Eingabebereich 47 und Ausgabebereich 48 automatisch ein Verfahren des Schlittens 28. Bei gleicher Geschwindigkeit beider Antriebe 64, 65 befindet sich der Speicher 10 quasi in stationärem Zustand. Ist die Geschwindigkeit im Ausgabebereich 48 größer als im Eingabebereich 47, verkürzt sich der Volltrum 66 bei entsprechender Verlängerung des Leertrums 67. Ist die Geschwindigkeit im Eingabebereich 47 größer als im Ausgabebereich 48, verkürzt sich der Leertrum 67 bei entsprechender Verlängerung des Volltrums 66.

Der Speicher 10 kann als Bodenversion ausgebildet sein. Das bedeutet, dass der Speicher 10 unmittelbar an den vor- und/oder nachgeschalteten Maschinen bzw. an einer Stützenkonfiguration befestigt ist. Eine solche Version bietet Vorteile bei der Störungsbeseitigung und der Wartung. Die Speicherebenen befinden sich dabei oberhalb der Make-Pack-Kombination, wodurch die erforderlichen Durchgangshöhen gewährleistet sind. Der Speicher 10 ist aber auch als Deckenversion einsetzbar. Die letztgenannte Version weist einen sehr geringen Flächenbedarf und kurze Wege auf.

Das Prinzip des Speichers 10 wird im folgenden beschrieben:
Der Massenstrom, bestehend üblicherweise aus quer auf der Kette 63 liegenden Zigaretten, wird - ausgehend vom Maker - auf der Kette 63 im Eingabebereich 47 über die Einlaufscheibe 39 in den Speicher 10 eingeführt und kontinuierlich durch die variable, aus Volltrum 66 und Leertrum 67 bestehende Speicherschleife nach dem Prinzip First in- first out geführt. Die Länge der Speicherschleife hängt vom gewünschten maximalen Speicherfüllstand ab. Der Massenstrom wird auf der Kette 63 serpentinenförmig, also dem Verlauf der Kette 63 folgend, um die Einlaufscheibe 39 und die Speicherscheiben 21, 26 sowie die Auslaufscheibe 23 vom Eingabebereich 47 zum Ausgabebereich 48 transportiert und dort an den Packer übergeben. Durch die Neigung der Einlaufscheibe 39 und der Speicherscheiben 21, 26 wird die Kette 63 von einer Ebene in die nächste geführt. Zweckmäßigerweise weist der Speicher 10 einen Mindestfiillstand auf, so dass der Packer beim Stillstand des Makers aus dem Speicher 10 mit Zigaretten versorgt wird. Durch die Entnahme der Zigaretten aus dem Speicher 10 verringert sich - bei größerer Geschwindigkeit des Antriebs 65 im Vergleich zum Antrieb 64 - die Länge des Volltrums 66 während sich die Länge des Leertrums 67 - bei gleichbleibender Gesamtlänge der Kette 63 im Gesamtsystem - vergrößert, indem sich der Schlitten 28 bzw. der bewegliche Scheibenturm 20 in Richtung des ortsfesten Scheibenturms 19 bewegt. Wenn das Speicherminimum erreicht ist, muss ein Packerstillstand erfolgen, bis wieder ein vorgegebener Mindestfüllstand erreicht ist.

Beim Stillstand des Packers erhöht sich der Speicherfüllstand, da die Zigaretten vom Maker in den Speicher 10 gefördert werden. Dadurch vergrößert sich der Volltrum 66, indem sich der bewegliche Scheibenturm 20 vom ortsfesten Scheibenturm 19 entfernt. Gleichzeitig verringert sich die Länge des Leertrums 67, bis das Speichermaximum erreicht ist. Als Sonderbetriebsart ist zusätzlich das Trennen fehlerhafter Zigaretten vom Massenstrom durch langsames Herausfahren der Zigaretten im Bereich des Eingabebereichs 47 bevorzugt.

## Patentansprüche

1. Speichereinrichtung mit variabler Speicherkapazität, insbesondere zum Speichern stabförmiger Produkte, mit einem Eingabebereich (47), einem Ausgabebereich (48) sowie einem kontinuierlichen Förderelement (62), das den Eingabebereich (47) mit dem Ausgabebereich (48) verbindet, derart, dass der Speicher (10) nach dem Prinzip "First in First out" (FiFo-Speicher) arbeitet, wobei das Förderelement (62), das mittels Führungselementen schleifenartig vom Eingabebereich (47) bis zum Ausgabebereich (48) geführt ist, einen üblicherweise mit Produkten versehenen mehrlagigen Speicherbereiche nämlich einen sogenannten Volltrum (66), sowie einen üblicherweise produktfreien mehrlagigen Rückführbereich, nämlich einen sogenannten Leertrum (67), aufweist, wobei sich die beiden Bereiche in der Länge je nach Füllstand des Speichers (10) kompensieren, derart, dass die gesamte Länge des Förderelementes (62) konstant ist, und der Volltrum (66) und der Leertrum (67) jeweils über separate Führungselemente verfügen, wobei sowohl der Volltrum (66) als auch der Leertrum (67) jeweils über ein ortsfestes Führungselement und ein bewegbares Führungselement verfügen und die bewegbaren Führungselemente von Volltrum (66) und Leertrum (67) an einem gemeinsamen Schlitten (28) angeordnet sind, wobei das ortsfeste und das bewegbare Führungselement des Volltrums (66) als Scheibentürme (19, 20) ausgebildet sind, die jeweils mehrere Scheiben (21, 26) aufweisen, die auf einer vertikalen Achse (22, 27) drehbar angeordnet sind wobei der Volltrum (66) und der Leertrum (67) in einer gemeinsamen horizontalen Ebene nebeneinander angeordnet sind, und wobei jeder Lage des Volltrums (66) eine korrespondierende Lage des Leertrums (67) in derselben Ebene zugeordnet ist, **dadurch gekennzeichnet, dass** das ortsfeste und das bewegbare Führungselement des Leertrums (67)
unterschiedlich ausgebildet sind, derart, dass das bewegbare Führungselement des Leertrums (67) aus zwei Tellertürmen (33, 34), die jeweils mehrere Teller (35,36) aufweisen, die auf einer vertikalen Achse (37,38) drehbar angeordnet sind und deren Durchmesser deutlich geringer, nämlich höchstens halb so groß, sind wie die Durchmesser der Speicherscheiben (21, 26), gebildet ist, und dass das ortsfeste Führungselement des Leertrums (67) aus mehreren Umlenkrollen (51, 53), die jeweils auf einer horizontalen Achse (52, 55) drehbar angeordnet sind, gebildet ist.

2. Speicher nach Anspruch 1, **dadurch gekennzeichnet, dass** die Scheibentürme (19,20) des Volltrums (66) relativ zueinander bewegbar sind, derart, dass ein erster Scheibenturm (19) ortsfest und der zweite Scheibenturm (20) in einer horizontalen Ebene linear zum ersten Scheibenturm (19) bewegbar ausgebildet ist.

3. Speicher nach Anspruch 1 oder 2, **dadurch gekennzeichnet, dass** die Tellertürme (33, 34) des Leertrums (67) in einer horizontalen Ebene linear bewegbar ausgebildet sind.

4. Speicher nach einem der Ansprüche 1 bis 3, **dadurch gekennzeichnet, dass** die Anzahl der Umlenkrollen (51,53) von der Anzahl der Speicherscheiben (21, 26) bzw. Teller (35, 36) abhängt.

5. Speicher nach einem der Ansprüche 1 bis 4, **dadurch gekennzeichnet, dass** das Förderelement (62) als endlose Kette (63) ausgebildet ist.

6. Speicher nach einem der Ansprüche 1 bis 5, **dadurch gekennzeichnet, dass** im Eingabebereich (47) und Ausgabebereich (48) des Speichers (10) jeweils ein Antrieb (64, 65) für das Förderelement (62) bzw die Kette (63) angeordnet list

7. Speicher nach einem der Ansprüche 1 bis 6, **dadurch gekennzeichnet, dass** oberhalb der Seheibentürme (19, 20) eine Einlaufscheibe (39) und unterhalb des ortsfesten Scheibenturms (19) eine Auslaufscheibe (23) angeordnet ist, wobei der Durchmesser der Einlaufscheibe (39) größer als der Durchmesser der Auslaufscheibe (23) und der Durchmesser der Auslaufscheibe (23) größer als der Durchmesser der Speicherscheiben (21, 26) ist.

8. Speicher nach Anspruch 7, **dadurch gekennzeichnet, dass** mindestens die Speicherscheiben (21) des ortsfesten Scheibenturms (19) sowie die Einlaufscheibe (39) und die Auslaufscheibe (23) geneigt zu einer horizontalen Ebene sind.

9. Speicher nach einem der Ansprüche 1 bis 8, **dadurch gekennzeichnet, dass** sämtliche Achsen (22,27,37,38) der Scheibentürme (19,20) und der Tellertürme (33, 34) jeweils an ihren beiden Enden gelagert sind.

10. Speicher nach einem der Anspruche 1 bis 9, **dadurch gekennzeichnet, dass** das Förderelement (62) bzw. die Kette (63) entlang der Längsseiten des Speichers (10) zu beiden Seiten durch Führungsbleche (61) geführt ist.

11. Speicher nach einem der Ansprüche 1 bis 10, **dadurch gekennzeichnet, dass** die Längen des Volltrums (66) und des Leertrums (67) und damit die Speicherkapazität des Speichers (10) mittels der Geschwindigkeitsdifferenz zwischen dem Antrieb (64) im Eingabebereich (47) und dem Antrieb (65) im Ausgabebereich (48) automatisch veränderbar sind.

12. Speicher nach einem der Ansprüche 1 bis 11, **dadurch gekennzeichnet, dass** im Bereich des Leertrums (67) eine Spannvorrichtung (54) für das Förderelement (62) bzw. die Kette (63) vorgesehen ist, wobei die Spannvorrichtung (54) aus einem Rahmen (46), einer Spannleiste (56), einem Gewicht (58), einem Seil (57), einer Spannrolle sowie einer Umlenkrolle (59) gebildet ist.

## Claims

1. Storage device with variable storage capacity, in particular for storing rod-shaped products, having an input area (47), an output area (48) and a continuous conveying element (62) which connects the input area (47) to the output area (48), in such a way that the store (10) operates on the principle of "first in - first out" (FIFO store), wherein the conveying element (62), which is guided by means of guide elements in a loop from the input area (47) to the output area (48), has a multi-layer storage area normally provided with products, namely a so-called full strand (66), and a multi-layer return area which is normally product-free, namely a so-called empty strand (67), wherein the two areas compensate each other in length depending on the state of fullness of the store (10), in such a way that the overall length of the conveying element (62) is constant, and the full strand (66) and the empty strand (67) in each case have separate guide elements, wherein both the full strand (66) and the empty strand (67) have in each case a stationary guide element and a movable guide element, and the movable guide elements of full strand (66) and empty strand (67) are arranged on a common slide (28), wherein the stationary and the movable guide elements of the full strand (66) are constructed as disc towers (19, 20) which in each case have several discs (21, 26) which are mounted rotatably on a vertical axis (22, 27), wherein the full strand (66) and the empty stand (67) are arranged side-by-side in a common horizontal plane, and wherein each layer of the full strand (66) is allocated a corresponding layer of the empty strand (67) in the same plane, **characterized in that** the stationary and the movable guide elements of the empty strand (67) are constructed differently, such that the movable guide element of the empty strand (67) is composed of two plate towers (33, 34) which in each case have several plates (35, 36) which are mounted rotatably on a vertical axis (37, 38) and of which the diameters are much smaller, namely not more than half, than the diameters of the storage discs (21, 26), and **in that** the stationary guide element of the empty strand (67) is composed of several deflecting rollers (51, 53) which are mounted rotatably in each case on a horizontal axis (52, 55).

2. Store according to claim 1, **characterised in that** the disc towers (19, 20) of the full strand (66) are movable relative to each other, in such a way that a first disc tower (19) is stationary and the second disc tower (20) is movable in a horizontal plane linearly to the first disc tower (19).

3. Store according to claim 1 or 2, **characterised in that** the plate towers (33, 34) of the empty strand (67) are linearly movable in a horizontal plane.

4. Store according to any one of claims 1 to 3, **characterised in that** the number of deflecting rollers (51, 53) depends on the number of storage discs (21, 26) or plates (35, 36).

5. Store according to any one of claims 1 to 4, **characterised in that** the conveying element (62) is constructed as an endless chain (63).

6. Store according to any one of claims 1 to 5, **characterised in that** in the input area (47) and output area (48) of the store (10) is mounted in each case a drive (64, 65) for the conveying element (62) and the chain (63), respectively.

7. Store according to any one of claims 1 to 6, **characterised in that** above the disc towers (19, 20) is arranged an inlet disc (39) and below the stationary disc tower (19) is arranged an outlet disc (23), wherein the diameter of the inlet disc (39) is greater than the diameter of the outlet disc (23), and the diameter of the outlet disc (23) is greater than the diameter of the storage discs (21, 26).

8. Store according to claim 7, **characterised in that** at least the storage discs (21) of the stationary disc tower (19) as well as the inlet disc (39) and the outlet disc (23) are inclined to a horizontal plane.

9. Store according to any one of claims 1 to 8, **characterised in that** all of the axes (22, 27, 37, 3 8) of the disc towers (19, 20) and plate towers (33, 34) are in each case supported at both of their ends.

10. Store according to any one of claims 1 to 9, **characterised in that** the conveying element (62) or the chain (63) is guided along the longitudinal sides of the store (10) on both sides by guide plates (61).

11. Store according to any one of claims 1 to 10, **characterised in that** the lengths of the full strand (66) and the empty strand (67) and therefore the storage capacity of the store (10) are automatically changeable by means of the difference in speed between the drive (64) in the input area (47) and the drive (65) in the output area (48).

12. Store according to any one of claims 1 to 11, **characterised in that** in the area of the empty strand (67) is provided a tensioning device (54) for the conveying element (62) or the chain (63), wherein the tensioning device (54) is composed of a frame (46), a tensioning bar (56), a weight (58), a rope (57), a tensioning roller and a deflecting roller (59).

## Revendications

1. Dispositif accumulateur à capacité d'accumulation variable, en particulier pour l'accumulation de produits en forme de tiges, comprenant une région de chargement (47), une région de déchargement (48), ainsi qu'un élément de transport continu (62) qui relie la région de chargement (47) à la région de déchargement (48) de sorte que l'accumulateur (10) fonctionne selon le principe "premier entré - premier sorti" (accumulateur FiFo), dans lequel l'élément de transport (62), guidé en boucle de la région de chargement (47) à la région de déchargement (48) au moyen d'éléments de guidage, présente une région d'accumulation à plusieurs couches généralement occupée par des produits, appelée brin plein (66), ainsi qu'une région de retour à plusieurs couches, généralement libre de produits, appelée brin vide (67), les deux régions se compensant en longueur selon le niveau de remplissage de l'accumulateur (10) de sorte que la longueur totale de l'élément de transport (62) est constante, et dans lequel le brin plein (66) et le brin vide (67) disposent chacun d'éléments de guidage séparés, aussi bien le brin plein (66) que le brin vide (67) disposant chacun d'un élément de guidage fixe et d'un élément de guidage mobile et les éléments de guidage mobiles du brin plein (66) et du brin vide (67) étant agencés sur un chariot commun (28), l'élément de guidage fixe et l'élément de guidage mobile du brin plein (66) étant constitués par des tours à disques (19, 20) qui présentent chacune plusieurs disques (21, 26) montés à rotation sur un axe vertical (22, 27), le brin plein (66) et le brin vide (67) étant disposés l'un à côté de l'autre dans un plan horizontal commun, et à chaque couche du brin plein (66) étant associée, dans le même plan, une couche correspondante du brin vide (67), **caractérisé en ce que** l'élément de guidage fixe et l'élément de guidage mobile du brin vide (67) sont configurés différemment, de telle sorte que l'élément de guidage mobile du brin vide (67) est formé de deux tours à plateaux (33, 34) qui présentent chacune plusieurs plateaux (35, 36) montés à rotation sur un axe vertical (37, 38) et dont le diamètre est nettement plus petit, notamment au maximum deux fois plus petit, que le diamètre des disques d'accumulateur (21, 26), et que l'élément de guidage fixe du brin vide (67) est formé de plusieurs rouleaux de renvoi (51, 53) qui sont montés à rotation respectivement sur un axe horizontal (52, 55).

2. Accumulateur selon la revendication 1, **caractérisé en ce que** les tours à disques (19,20) du brin plein (66) peuvent être déplacées l'une par rapport à l'autre en ce sens qu'une première tour à disques (19) est fixe et que la deuxième tour disques (20) est mobile en mouvement linéaire par rapport à la première tour à disques (19) dans un plan horizontal.

3. Accumulateur selon la revendication 1 ou 2,
**caractérisé en ce que** les tours à plateaux (31, 34) du brin vide (67) sont mobiles en mouvement linéaire dans un plan horizontal.

4. Accumulateur selon l'une des revendications 1 à 3, **caractérisé en ce que** le nombre des rouleaux de renvoi (51, 53) dépend du nombre des disques d'accumulateur (21, 25) ou des plateaux (35, 36).

5. Accumulateur selon l'une des revendications 1 4,
**caractérisé en ce que** l'élément de transport (62) est constitué par une chaîne sans fin (63).

6. Accumulateur selon l'une des revendications 1 à 5,
**caractérisé en ce que**, dans la région de chargement (47) ainsi que dans la région de déchargement (48) de l'accumulateur (10), est disposé respectivement un entraînement (64, 65) pour l'élément de transport (62) ou la chaîne (63).

7. Accumulateur selon l'une des revendications 1 à 6,
**caractérisé en ce qu'**au-dessus des tours à disques (19, 20) est disposé un disque d'entrée (39) et, au-dessous de la tour à disques fixe (19), est disposé un disque de sortie (23), le diamètre du disque d'entrée (39) étant plus grand que le diamètre du disque de sortie (23) et le diamètre du disque de sortie (21) étant plus grand que le diamètre des disques d'accumulateur (21, 26).

8. Accumulateur selon la revendication 7,
**caractérisé en ce qu'**au moins les disques d'accumulateur (21) de la tour à disques fixe (19) ainsi que le disque d'entrée (39) et le disque de sortie (23) sont inclinés par rapport à un plan horizontal.

9. Accumulateur selon l'une des revendications 1 à 8,
**caractérisé en ce que** tous les axes (22, 27, 37, 38) des tours à disques (19, 20) et des tours à plateaux (33, 34) sont montés respectivement à leurs deux extrémités.

10. Accumulateur selon l'une des revendications 1 à 9,
**caractérisé en ce que** l'élément de transport (62) ou la chaîne (63) est guidé(e) le long des côtés longitudinaux de l'accumulateur (10) par des tôles de guidage (61) sur les deux côtés.

11. Accumulateur selon une des revendications 1 à 10,
**caractérisé en ce que** les longueurs du brin plein (66) et du brin vide (67) et donc la capacité d'accumulation de l'accumulateur (10) peuvent être modifiées automatiquement au moyen de la différence de vitesse entre l'entraînement (64) situé dans la région de chargement (47) et l'entraînement situé dans la région de déchargement (48).

12. Accumulateur selon l'une des revendications 1 à 11,
**caractérisé en ce que**, dans la région du brin vide (67), est prévu un dispositif de tension (54) pour l'élément de transport (62) ou la chaîne (63), le dispositif de tension (54) étant formé d'un châssis (46), d'une barre de tension (56), d'un poids (58), d'un câble (57), d'un rouleau de tension ainsi que d'un rouleau de renvoi (59).
